# EUROPEAN PATENT APPLICATION

(11) **EP 4 407 278 A1**
(43) Date of publication of application: **31.07.2024**
(21) Application number: 22872562.8
(22) Date of filing: 01.08.2022
(51) Int. Cl.: G01D 21/00, G01N 35/00, G06F 11/07, G06F 11/22, G06Q 10/00, G06Q 50/10, G05B 23/02

(54) **INFORMATION PROCESSING DEVICE AND AUTOMATIC ANALYSIS SYSTEM**

(30) Priority: 22.09.2021 JP 2021154440
(71) Applicant: HITACHI HIGH-TECH CORPORATION, Tokyo 105-6409 (JP)
(72) Inventor: YOKOHARI, Takashi, Tokyo 100-8280 (JP); NISHIKI, Kenichiro, Tokyo 105-6409 (JP)
(74) Representative: Mewburn Ellis LLP
(86) International application number: PCT/JP2022/029481
(87) International publication number: WO 2023/047806

(57) **Abstract**

In order to enable rapid identification of a failure mode, the present disclosure proposes an information processing device comprising: an extended FMEA database containing, on a per-failure effect basis, information on check items, information on the degree of association between the check items and the failure effect, and information on previous events of the check items; and a processor that obtains information on a check item confirmed as an event and that identifies a failure mode corresponding to a failure effect on the basis of the obtained check item, wherein the processor executes a first process for extracting information on the failure effect related to the check item from the extended FMEA database, a second process for calculating a score value for the failure effect extracted in the first process by referring to information on the degree of association between the check item and the failure effect, and a third process for presenting, on the basis of the score value, the failure mode corresponding to the failure effect extracted in the first process (see FIG. 2) .

## Description

### Technical Field

The present disclosure relates to an information processing device and an automatic analysis system.

### Background Art

For example, when a problem occurs in an automatic analysis system, a check item (for example, a content of a system alert, and log data of a sensor) is inspected to identify a content of failure. However, an inspector without much experience does not know which inspection item to check, and identification of the failure takes time in a case in which, for example, anomaly appears in a plurality of check items at the same time.

In order to solve such a problem, for example, PTL 1 discloses a failure diagnosis apparatus for an electronic system for a vehicle. According to the failure diagnosis apparatus, a part which needs to be monitored is determined on a per-failure symptom basis during a designing phase, and an operator is allowed to select an appropriate inspection item by selecting a specific symptom from a variety of failure symptoms displayed in a list.

Moreover, PTL 2 discloses a maintenance operation assistance system which uses a failure knowledge database in which failure knowledge data is recorded to set priority for when presenting an inspection procedure to a maintenance operator, and presents the inspection procedure to a diagnostic interface unit based on the priority.

Furthermore, PTL 3 discloses a method for monitoring a state of a facility. In the method, mode dividing for each operating mode is performed based on an event signal outputted from the facility, a normal model is created for each mode, sufficiency of learning data is checked for each mode, and anomaly is identified based on a threshold set in accordance with the result.

Moreover, PTL 4 discloses an equipment maintenance method and device which include a database in which an inspection record and a failure record are accumulated. The equipment maintenance method and device compare a currently occurring failure record and a previous failure record, and display dealing items corresponding to the failure records having high similarity, in order from the one corresponding to the failure record having higher similarity.

### Citation List

### Patent Literature

PTL 1: JPH10-78376A
PTL 2: JP2019-204302A
PTL 3: JP2014-59910A
PTL 4: JP2019-191705A

### Summary of Invention

### Technical Problem

A variety of sensors are used for the failure detection in PTLs 1 to 4. However, many of the sensors do not detect occurrence of a failure mode (structural disorder such as disconnection, short circuit, breakage, wearing, and characteristic degradation of a part or a component) itself, but detect a change in an apparatus condition (a failure effect, or a functional failure effect) caused by occurrence of a functional failure (failure of a function caused by the failure mode of the component). Therefore, the failure mode cannot rapidly be identified when sensors output an anormal value, and efficiency of maintenance operation cannot be improved. Thereby, for a user without much experience, the situation in which identification of failure takes time has not been improved.

The present disclosure is made in view of the above situation, and proposes a technique to enable rapid identification of a failure mode.

### Solution to Problem

In order to solve the problem, the present disclosure proposes an information processing device including an extended FMEA database and a processor. The extended FMEA database includes, on a per-failure effect basis, information on a check item, information on a degree of association between the check item and the failure effect, and information on a previous event of the check item. The processor obtains information on a check item confirmed as an event, and identifies a failure mode corresponding to a failure effect on the basis of the obtained check item. The processor executes a first process, a second process, and a third process. The first process is for extracting information on the failure effect associated with the check item from the extended FMEA database. The second process is for calculating a score value for the failure effect extracted in the first process by referring to the information on the degree of association between the check item and the failure effect. The third process is for presenting, on the basis of the score value, the failure mode corresponding to the failure effect extracted in the first process.

Further features related to the disclosure become apparent from the description herein and the accompanying drawings. Moreover, the aspect of the disclosure is achieved and realized by elements and various combinations of the elements, and in a mode according to the following detailed description and the appended claims.

Description provided herein is merely a typical illustration, and not intended to limit the claims or application examples of the disclosure in any sense.

### Advantageous Effects of Invention

According to the technique of the present disclosure, the failure mode can rapidly be narrowed down.

### Brief Description of Drawings

[FIG. 1] FIG. 1 is a diagram illustrating a schematic configuration example of a maintenance assistance device (an information processing device with a system maintenance assistance function) 10 according to the embodiment.
[FIG. 2] FIG. 2 is a diagram illustrating a software internal configuration example of a maintenance-assistance-related processing module 101 and an extended FMEA database 141.
[FIG. 3] FIG. 3 is a diagram illustrating a concept of each state in FMEA (a relationship between the respective states: particularly a causal relationship).
[FIG. 4] FIG. 4 is a diagram illustrating a relationship between a failure effect and check information (including each information on a check item, a degree of association, and a previous event).
[FIG. 5] FIG. 5 is a chart showing one example of a definition of the degree of association.
[FIG. 6] FIG. 6 is a flowchart for explaining details of a failure mode estimation processing in the maintenance assistance device 10.
[FIG. 7] FIG. 7 is a diagram illustrating a GUI configuration example of a failure effect selection screen 700.
[FIG. 8] FIG. 8 is a diagram illustrating a GUI example which displays a candidate of a functional failure and a failure mode which match an inputted failure effect.
[FIG. 9] FIG. 9 is a diagram illustrating a screen configuration example of a check information input GUI for inputting check information.
[FIG. 10] FIG. 10 is a diagram illustrating an example of a score value of the failure effect associated with the selected check information.
[FIG. 11] FIG. 11 is a diagram for explaining prioritization of the failure effect in consideration of the previous event.
[FIG. 12] FIG. 12 is a diagram illustrating a failure mode estimation result (priority order) display 1200 (one example).
[FIG. 13] FIG. 13 is a diagram illustrating a schematic configuration example of an automatic analysis system 1300 in which the failure mode estimation processing is embedded.

### Description of Embodiments

Embodiments describe a technique for supporting identification of a failure mode when a functional failure occurs, on the basis of FMEA (Failure Mode and Effects Analysis). The embodiments focus on a fact that a check item valid for identifying a cause of a functional failure varies depending on a type of the functional failure. Also, in the embodiments, "the check item", "a degree of association between the check item and a functional failure effect", and "a previous event of the check item" are defined on a per-functional failure effect basis, and these are used to calculate a degree of matching between a failure event and a check result, thus the functional mode being narrowed down.

Hereinafter, the embodiments of the present disclosure will be described with reference to the accompanying drawings. In the accompanying drawings, the functionally same components may be denoted by the same numerals. Note that although the accompanying drawings illustrate a specific embodiment and an implementation example based on a principle of the disclosure, the drawings are provided to promote understanding of the disclosure, and never intended to be used to limit interpretation of the disclosure.

In the embodiments, description is made in sufficient detail so that a person skilled in the art can work the disclosure. However, it should be understood that other implementation and embodiments are also possible, and changing of configurations and structures, and replacement of various components are possible without departing from a scope and spirit of the concept of the disclosure. Thereby, the following description is not to be interpreted limitedly.

Furthermore, the embodiments of the disclosure may be, as will be described later, implemented by software which runs on a general-purpose computer, or implemented by dedicated hardware or a combination of software and hardware.

Note that in the following description, various information of the disclosure may be described in a "table" format. However, the information is not necessarily expressed by the table data structure, but may be expressed by data structures such as a list, a DB, and a queue, and others. Therefore, in order to indicate that the information does not depend on the data structure, the "table", "list", "DB", "queue", and the like may simply be referred to as "information".

Moreover, when describing a content of each information, expression of "identification information", "identifier", "label", "name", and "ID" can be used, and they are replaceable from one other.

Below, each processing in the embodiments of the disclosure is described while assuming that a "program (each processing module)" is a subject (actor). However, a processor executes the program, and thus a given processing is performed by using a memory and a communication port (a communication control device). Therefore, description may be made while assuming that the processor is the subject. Moreover, a processing which is disclosed while assuming that a program is a subject may be a processing which is executed by a calculator such as a management server, or an information processing device. A part of or the entire program may be implemented by dedicated hardware, or may be modularized. A variety of programs may be installed in each calculator by a program distribution server or a storage medium.

### (1) First Embodiment

### <Definition of Term in FMEA>

In this embodiment, failure analysis is performed by using each failure state in the FMEA. First, each failure state in the FMEA is defined. As mentioned above, the FMEA includes, as the failure state, a failure mode, a functional failure, and a failure effect. With regard to these states in the FMEA, a causal relationship is established in order of the failure mode → the functional failure → the failure effect.

### (i) Explanation of Term

The failure mode refers to physical damage of a component, a part, or the like caused in a device or a system subject to maintenance. This is a state in which replacement of the damaged component or the like is necessary.

The functional failure refers to operation (a phenomenon or a symptom) of the device or the system caused by the damage of the component. This is a phenomenon or a symptom (for example, occurrence of liquid leakage) which is caused by the device or system subject to the maintenance not operating as it should.

The failure effect refers to an event which is observed as a result of the functional failure. For example, this includes a measurement result fault. The check item means an event which can be confirmed by a user through observation or an event which can be confirmed in a sensor log or the like. For example, the check item includes occurrence of pressure increase. The thing (component or part) which fails is not directly checked, but what is caused due to the failure is inspected. That is, for a user, recognizing whether an event which is different from an ordinary event occurs in the system is easier than recognizing which component or part fails. Therefore, the currently occurring event is set as the check item, and an associated failure part (failure mode) is identified therefrom. That is, this is based on an idea that, for example, although whether a motor gear which is a component lacks cannot be found unless a device or a system is disassembled, an effect caused by the lack of the gear can be observed (recognized) easily.

### (ii) Concrete Example

For example, in an automatic analysis device, a case in which the failure mode is a failure of a plunger is considered. At this time, the functional failure is a state in which liquid cannot be fed out by an appropriate capacity. When the liquid is not fed out by the appropriate capacity, a measurement result fault or a liquid feeding fault from a cleaning pump may occur (failure effect). A means which actually detects occurrence of this failure effect is a pressure sensor or a position sensor, and when a numerical value obtained by the sensor is anormal, this obtained value becomes the check item. That is, the check item directly links with the failure effect. Also, a candidate of the failure effect can be extracted based on the check item, and a functional failure and a failure mode can be identified based on each candidate of the failure effect.

### <Configuration Example of Maintenance Assistance Device>

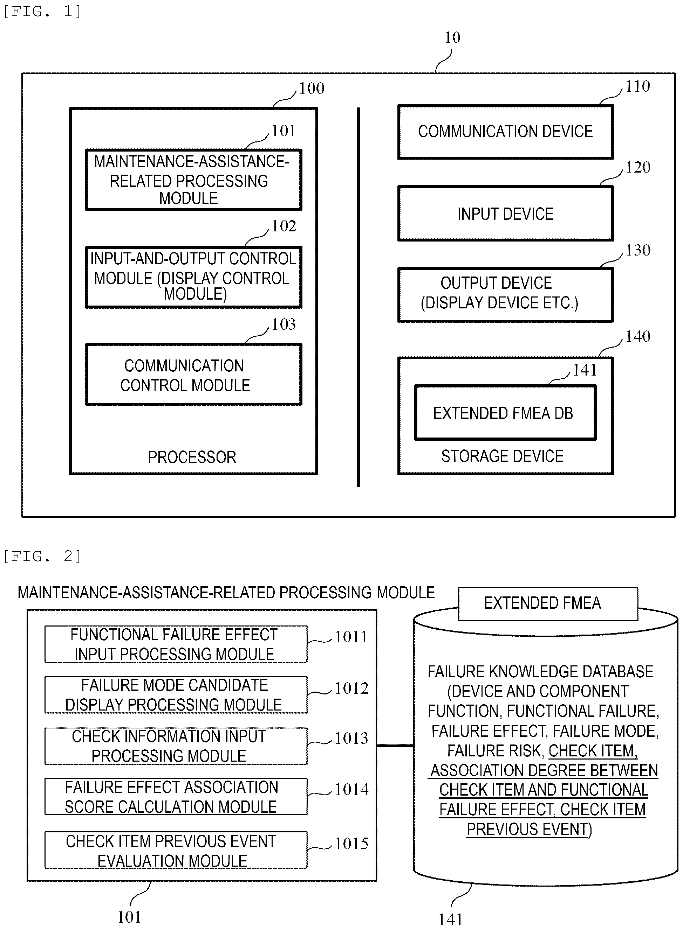

FIG. 1 is a diagram illustrating a schematic configuration example of a maintenance assistance device (an information processing device with a system maintenance assistance function) 10 according to this embodiment. The maintenance assistance device 10 can be actualized by the system maintenance assistance function being implemented on an ordinary computer. FIG. 1 illustrates a state in which various programs are resigned by a processor.

The maintenance assistance device 10 includes a processor 100, a communication device 110, an input device 120, an output device 130, and a storage device 140.

The communication device 110 can execute communication with a device or a system connected to the maintenance assistance device 10, and communication with a computer (a user terminal and the like) connected via a network. The input device 120 includes, for example, a device such as a keyboard and a mouse, and is configured so that a user can input data and instruction into the maintenance assistance device 10. The output device 130 includes, for example, a display device, and can display processed information and data on a display screen.

The storage device 140 includes, for example, a storage device such as a memory and an HDD, and stores various parameters and processed data. In addition, the storage device 140 stores an extended FMEA database 141 which will be described later. The extended FMEA database 141 stores information necessary for implementation of the system maintenance assistance function. Details will be described later.

The processor 100 executes a given processing in accordance with various programs. The processor 100 reads various programs from the storage device 140, and expands the programs in an internal memory (not illustrated). Therefore, at least a maintenance-assistance-related processing module 101, an input-and-output control module 102, and a communication control module 103 are generated in the internal memory.

The maintenance-assistance-related processing module 101 has a function to present to a user a failure mode of a device or a system subject to checking in order of priority, or a function to cause automatic recovery from a functional failure. The former is a function to present information to a user by a GUI processing, and the latter is a function to recover from a functional failure by a batch processing (non-GUI processing: see a second embodiment). Details of functional configurations and operation of the maintenance-assistance-related processing module 101 will be described later.

The input-and-output control module 102 passes information or data inputted from the input device 120 to the maintenance-assistance-related processing module 101, and also controls the output device 130 to output (display) information or data processed by the maintenance-assistance-related processing module 101.

Note that the system maintenance function may be executed by the maintenance assistance device 10 being connected to a device or a system subject to checking (subject to maintenance) directly or via a network. Alternatively, the maintenance-assistance-related processing module 101 and the the extended FMEA database 141 may be implemented on the device or the system subject to checking.

### <Detail of Maintenance-Assistance-Related Processing Module 101 and Extended FMEA Database 141>

FIG. 2 is a diagram illustrating a software internal configuration example of the maintenance-assistance-related processing module 101 and the extended FMEA database 141.

The maintenance-assistance-related processing module 101 includes a functional failure effect input processing module 1011, a failure mode candidate display processing module 1012, a check information input processing module 1013, a failure effect association score calculation module 1014, and a check item previous event evaluation module 1015.

The extended FMEA database 141 includes, in addition to information which is held by an ordinary FMEA database (information on functions of a device and a component, information on a functional failure, information on a failure effect, information on a failure mode, and information on a failure risk), information on a check item, information on a degree of association between the check item and the functional failure effect, and information on a previous event of the check item.

The functional failure effect input processing module 1011 receives information on a failure effect specified by a user, or information on a failure effect from a system etc., and passes the information to the failure mode candidate display processing module 1012. Details will be described later.

The check information input processing module 1013 generates and displays, on a display screen, a GUI (Graphical User Interface) for the user inputting information on the check item. The check information input processing module 1013 also accepts specification of the check item from the user, and passes the specification to the failure mode candidate display processing module 1012 and the failure effect association score calculation module 1014. Details will be described later.

The failure effect association score calculation module 1014 obtains, from the extended FMEA database 141, the information on the degree of association between the check item and the functional failure effect, and calculates a failure effect association score for each failure effect. Details will be described later.

The check item previous event evaluation module 1015 evaluates a match or a mismatch between an inputted previous event and an associated previous event regarding each failure effect, and in the case of the mismatch, the check item previous event evaluation module 1015 notifies to the failure mode candidate display processing module 1012 to lower display priority. Details will be described later.

The failure mode candidate display processing module 1012 searches, based on the information on the functional failure obtained from the functional failure effect input processing module 1011, the extended FMEA database 141 to obtain information on an associated failure mode. Moreover, the failure mode candidate display processing module 1012 executes a processing to display the functional failure and the failure mode corresponding thereto in order of priority, based on the failure effect associated to the check item inputted by the user, its association score (obtained from the failure effect association score calculation module 1014), and the information on the previous event. Details will be described later.

In the extended FMEA database 141, the information on the check item varies depending on a type of the system subject to maintenance. The information on the degree of association between the check item and the functional failure effect is information in which deepness of association of the result (failure effect) caused relative to the occurred event (check item) is scored. For example, this is a numerical value (score) assigned based on a frequency of occurrence of an event of a check information A with respect to a failure effect 1. The failure mode candidate display processing module 1012 obtains this information from the extended FMEA database 141, and gives the information on the degree of association to the check item of each failure mode (allocates the score obtained from the database). Furthermore, when each check item includes an event preceding it (check information which occurs precedingly), a previous event is defined with respect to the check item concerned.

### <Concept of FMEA>

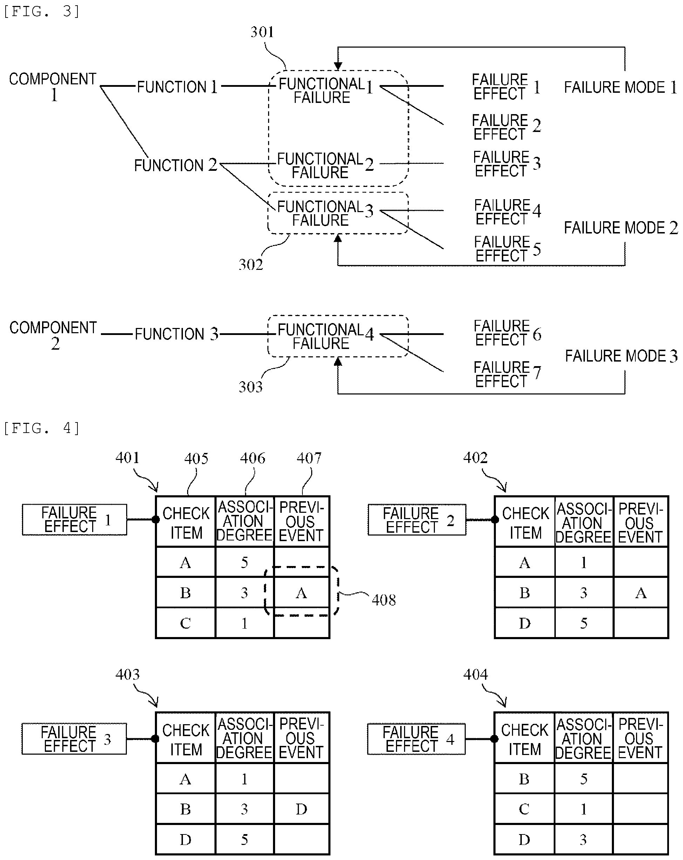

FIG. 3 is a diagram illustrating a concept of each state in the FMEA (a relationship between the respective states: particularly a causal relationship). The FMEA is a technique called a failure mode and effects analysis, and defines a method for evaluating a risk held by the product and the process mainly in a product designing phase and a process designing phase, and removing or reducing the risk as much as possible. Although a detailed method for performing the FMEA is omitted, this embodiment utilizes a feature that the failure mode can exhaustively be extracted by paying attention to the relationship between the respective states in the FMEA.

It can be seen in FIG. 3 that when a failure mode 1 occurs, functional failures 1 and 2 occur in functions 1 and 2 of a component 1. The functional failure 1 causes failure effects 1 and 2, and the functional failure 2 causes a failure effect 3. Moreover, when a failure mode 2 occurs, a failure function 3 occurs in a function 2 of the component 1, which results in "failure effects 4 and 5. Furthermore, when a failure mode 3 occurs, a "functional failure 4 occurs in a function 3 of a component 2, which results in failure effects 6 and 7. That is, connecting (linking), such as the failure mode 1 leading to occurrence of the functional failures 2 and 3, is established, and a functional failure 301 (the functional failures 1 and 2) is a functional failure linked to the failure mode 1, a functional failure 302 (the functional failure 3) is a functional failure linked to the failure mode 2, and a functional failure 303 (the functional failure 3) is a functional failure linked to the failure mode 3. The linking from the failure mode to the functional failure is only within the same component. As described above, a causal relationship exists between the failure mode and the functional failure, and a causal relationship also exists between the functional failure and the failure effect. Thereby, the failure mode is identifiable by tracing back from the failure effect.

Note that the structure illustrated in FIG. 3 may be expressed using a typical table creation tool in such a manner that a person can easily see the structure, and is not necessarily created in consideration of processing by software particularly. The same component name and the same failure mode do not exist, whereas the same function, the same functional failure, and the same failure effect exist (for example, the functional failure 1 and the functional failure 3 are the same, and the failure effect 2 and the failure effect 5 are the same). For example, both of a case in which a gear A fails and a case in which a gear B fails lead to the same failure effect when the same transmission fault occurs, which corresponds to the case having the different failure modes.

### <Relationship Between Failure Effect and Check Information>

FIG. 4 is a diagram illustrating a relationship between the failure effect and the check information (including each information on the check item, the degree of association, and the previous event). In FIG. 4, in terms of the failure, check information 401 to 404 associated with the failure effects 1 to 4 are illustrated.

In this embodiment, on the basis of the FMEA (where the function, the functional failure, the failure effect, the failure mode, the failure risk, and the like of the device or the component are analyzed systematically), a check item 405, a degree of association 406 between the check item and the failure effect, and a previous event 407 are newly added on a per-failure effect basis. That is, in this embodiment, as described above, the failure effect 1 to the failure effect 4 are associated with the check information 401 to the check information 404, and are stored in the extended FMEA database 141. For example, when a user recognizes (confirms) the failure effect 1, the check item 405 (check items A to C) associated with the failure effect 1, a corresponding degree of association 406 (5 points, 3 points, and 1 point), and a previous event (a previous event 408: a previous event of the check item "B" is "A") are extracted.

Additional explanation is given about the check item. Typically, detection of a functional failure (for example, liquid feeding by a pump being unstable, and dissolved gas being unremovable) itself is difficult, and thus behavior (failure effect) of a device during failure occurrence is detected. A check item such as log data obtained from a system alert or various sensors (one associated with the occurrence of the failure effect, and in which an output or a state different from an ordinary time is observed during the failure occurrence) is extracted on a per-failure effect basis.

### <Definition of Degree of Relevance (Example)>

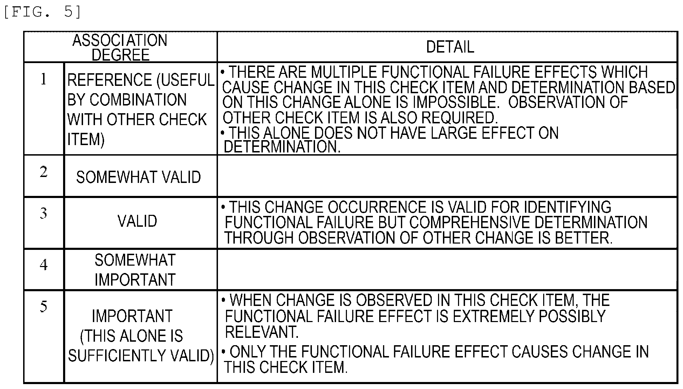

FIG. 5 is a chart showing a definition of the degree of association. The degree of association between the check item and the failure effect is defined as shown in FIG. 5, and under a condition in which a failure effect is caused by a certain functional failure, a degree of association is set on a per check-item basis of the failure effect and is made into a database. When the extended FMEA database 141 is built, the degrees of association are set for all the check items of all the failure effects. Note that, in terms of the previous event, when occurrence of change in the check item has a chronological relationship (before-and-after), the check item whose change occurs precedingly is set as the previous event.

### <Failure Mode Estimation Processing>

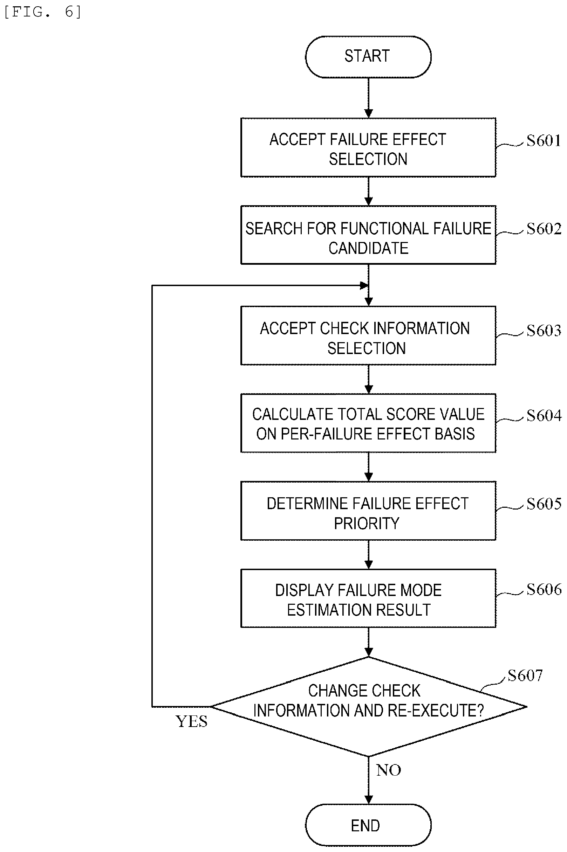

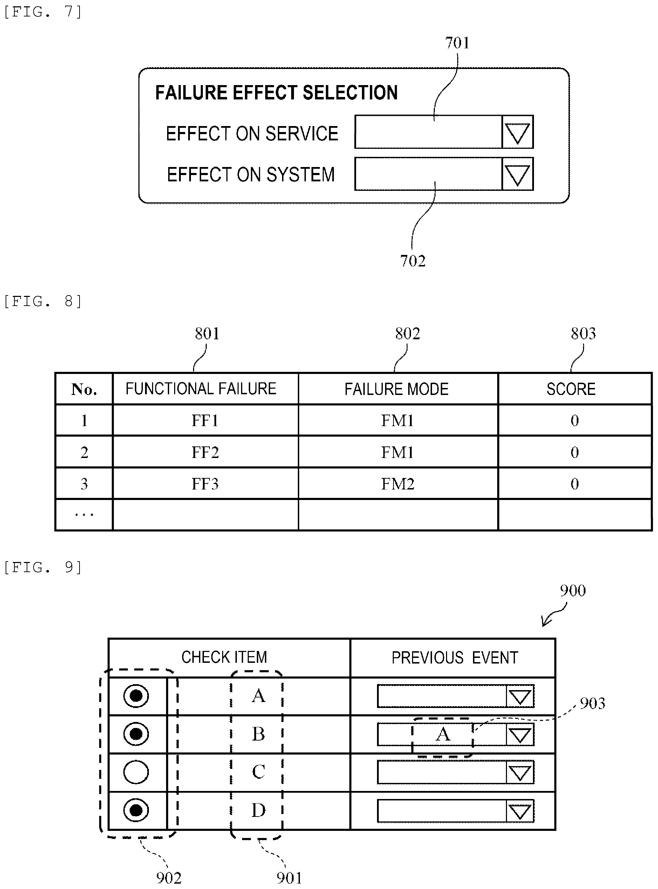

FIG. 6 is a flowchart for explaining details of a failure mode estimation processing in the maintenance assistance device 10. FIGS. 7 to 12 are diagrams illustrating a display of a GUI screen example at each step in the failure mode estimation processing, or a diagram for supplementarily explaining a processing content. Actors of the respective steps are the processing modules 1011 to 1015 included in the maintenance-assistance-related processing module 101. However, since these processing modules are implemented by a program code being expanded in an internal memory of the processor 100, the processor 100 may be the actor.

### (i) Step 601

The functional failure effect input processing module 1011 displays a failure effect selection screen 700 illustrated in FIG. 7 on a display screen (the output device 130) of the maintenance assistance device 10. A user selects, on the failure effect selection screen 700, the failure effect (an anormal state occurring in the device) from a drop-down list. The failure effect includes an effect to service 701 and an effect to system 702. The effect to service includes, for example, "device unusable", "unmeasurable", "measurement result faulty", and the like. The effect to system includes, for example, "separative power decrease", "liquid feeding faulty", "cleaning faulty", "liquid leakage", and the like.

When the user selects the failure effect (the effect to service 701 and/or the effect to system 702), the functional failure effect input processing module 1011 accepts the inputted failure effect, and passes the failure effect information to the failure mode candidate display processing module 1012.

### (ii) Step 602

The failure mode candidate display processing module 1012 searches the extended FMEA database 141 for a candidate of the functional failure (see FIG. 3) which matches (linked to) the failure effect obtained at Step 601. FIG. 8 is a diagram illustrating a GUI example which displays the candidate of the functional failure and the failure mode which match the inputted failure effect. That is, at least one set of the functional failure and the failure mode linked to the inputted (selected) condition (failure effect) is searched for.

The GUI in FIG. 8 displays a functional failure 801 and a failure mode 802 which causes the functional failure, which are associated with the failure effect. A score 803 based on the degree of association between the check item and the failure effect shows an initial value (for example, zero) in this stage.

### (iii) Step 603

The failure mode candidate display processing module 1012 obtains, from the extended FMEA database 141, the information on the check item associated with the failure effect obtained at Step 601. Then, the failure mode candidate display processing module 1012 passes the information to the check information input processing module 1013, and also instructs the check information input processing module 1013 to generate and display a check information input GUI.

The check information input processing module 1013 generates, in response to the instruction from the failure mode candidate display processing module 1012, the check information input GUI for selecting the received check item, and displays the GUI on the display screen.

FIG. 9 is a diagram illustrating a screen configuration example of the check information input GUI for inputting the check information. A check information input GUI 900 includes check information 901 associated with the failure effect selected (specified) by the user, a radio button 902 for the user selecting from the displayed check item, and a drop-down 903 for selecting the previous event. The check information input GUI 900 is for narrowing down the functional failure candidate based on the selection result by the user.

The check information input GUI 900 displays the check item (for example, check items A to D) 901 associated with the inputted failure effect. The user selects, by using the radio button 902, the check item where operation, a state, or a sensor value which is different from an ordinary time is confirmed. Moreover, when any of the check item has the previous event (for example, when the previous event can be visually confirmed by the user, or when the previous event can be identified based on log data of a measurement result), the user selects the previous event of the corresponding check item from the drop-down 903. A content of the drop-down list of the previous event is all the check items related to the currently selected failure effect.

FIG. 9 shows an input example in a case in which an event different from an ordinary time is observed in the check items A, B, and D (a state in which anomaly is not observed in the check item C), and A is observed as the previous event of the inspection item B. Inputting all the check items from the beginning is unnecessary, and the check item which can easily be confirmed may be inputted first, and then the failure mode candidate may be narrowed down.

### (iv) Step 604

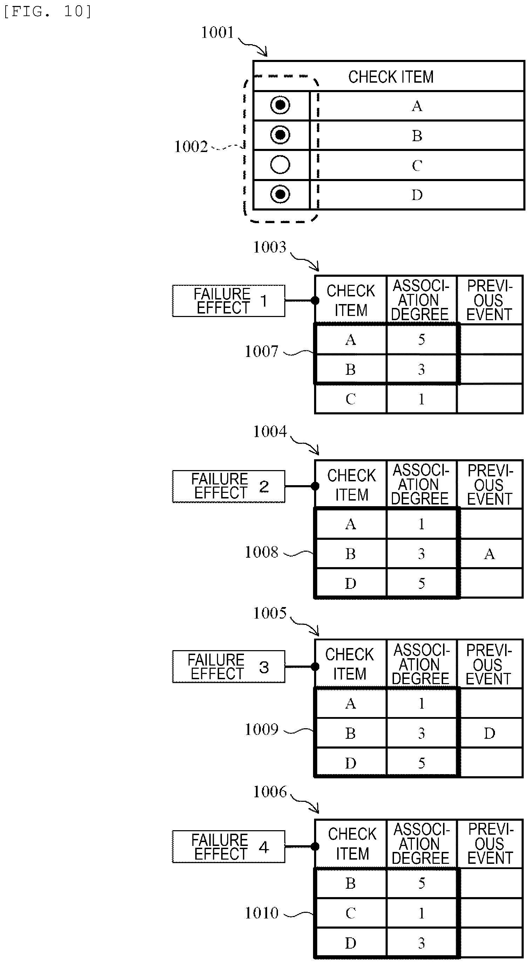

The failure effect association score calculation module 1014 obtains, from the extended FMEA database 141, the information on the failure effect (for example, the failure effects 1 to 3) associated with the selected check item (for example, the check items A, B, and D). Since a plurality of failure effects which are associated with the check item selected by the user (for example, the failure effect including two or more of the selected check items) are extracted, in FIG. 10, the failure effect which is not selected by the user at Step S601 is also subject to score value calculation. Therefore, the failure mode associated with the failure effect which is not intended (not recognizable) by the user can be presented to the user.

Next, the failure effect association score calculation module 1014 calculates, on the basis of the degree of association between the check item and each failure effect (the failure effects 1 to 3), a score value indicative of a matching level with a check result on a per-failure effect basis.

FIG. 10 is a diagram illustrating an example of the score value of the failure effect associated with the selected check information. A GUI 1001 is a display showing only the check item part of FIG. 9, where a check item 1002 corresponding to A, B, and D is marked (selected). Moreover, in FIG. 10, degrees of association 1007 to 1010 corresponding to the selected check item 1002 are shown in check information 1003, 1004, 1005, and 1006 of the failure effects 1 to 4. The value of the degree of association corresponding to the check item 1002 is used for the score value calculation.

Here, in order to make description easier, the score value is calculated simply by the sum of degrees of association. As shown in the degree of association 1007 of the check information 1003 of the failure effect 1, the check item of the failure effect 1 includes A, B, and C, where A and B match the check items selected by the user (the matched check item 1007). At this time, the degree of association of the check item A is "5", and the degree of association of the check item B is "3", and the overall score value is thus "8" which is obtained by adding the respective values. Similarly, in terms of the failure effect 2, the check items A, B, and D match (a matched check item 1008), and the overall score value is thus "9". In terms of the failure effect 3, the check items A, B, and D match (a matched check item 1009), and the overall score value is thus "9". In terms of the failure effect 4, the check items B and D match (a matched check item 1010), and the overall score value is thus "8".

### (v) Step 605

The failure mode candidate display processing module 1012 receives the score value of each failure effect (for example, the failure effects 1 to 4) from the failure effect association score calculation module 1014, and also searches for the failure effect in which the previous event does not match (in the example of FIG. 10, the failure effect 2 includes the previous event A, which matches, whereas the failure effect 3 includes the previous event D, which does not match).

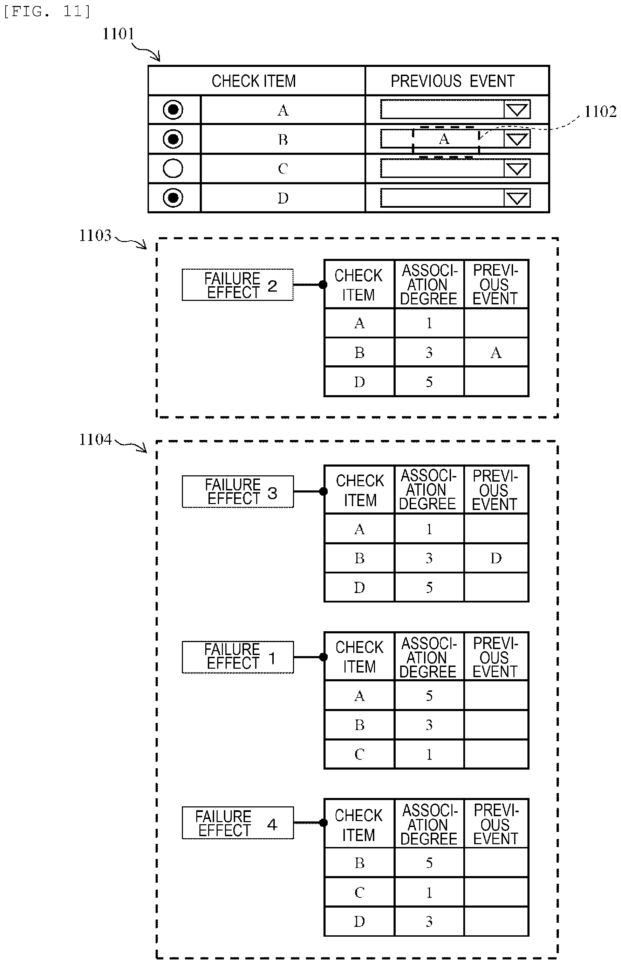

FIG. 11 is a diagram for explaining prioritization of the failure effect in consideration of the previous event. A check information display 1101 illustrated in FIG. 11 is the same display as the check information input GUI 900 illustrated in FIG. 9. The check information display 1101 shows a state in which the previous event A is selected for the check item B (see a previous event 1102). In this example, the failure effect 1 to the failure effect 4 are subject to prioritization, and priority is determined based on the check item associated with the failure effect 2, the check item associated with the failure effect 3, the check item associated with the failure effect 1, the check item associated with the failure effect 4, the total score values thereof, and presence/absence and matching of the previous event. The check item of the failure effect 2_1103 shows the case in which the check item B and the previous event A match the user's selection, and the check item of the failure effects 1, 3, and 4_1104 shows the case in which the previous event does not match (a case of including a different previous event, or a case without definition of a previous event).

The failure mode candidate display processing module 1012 lowers the priority when the previous event does not match even when the score value of the degree of association of the check item (the score value calculated at Step 604) is the same. In the example illustrated in FIG. 11, the failure mode candidate display processing module 1012 gives higher priority to the failure effect 2 including the previous event A the same as the user's selection among the failure effects 2 and 3 with the same score value.

### (vi) Step 606

The failure mode candidate display processing module 1012 displays, on the display screen in order of priority, the functional failures and the failure modes which correspond to the respective failure modes for which priority is determined at Step 605 and the score. For example, the failure mode candidate display processing module 1012 refers to the relationship (causal relationship) between the respective states in the FMEA illustrated in FIG. 3, to identify the functional failure and the failure mode corresponding to each failure effect. Specifically, with reference to FIG. 3, a functional failure corresponding to the failure effect 2 at the highest priority is identified to be the functional failure 1 (FF1), and a failure mode corresponding to the functional failure 1 is identified to be the failure mode 1 (FM1). A functional failure corresponding to the failure effect 3 at the second highest priority is identified to be the functional failure 2 (FF2), and a failure mode corresponding to the functional failure 2 is identified to be the failure mode 1 (FF1). A functional failure corresponding to the failure effect 1 at the third highest priority is identified to be the functional failure 1 (FF1), and a failure mode corresponding to the functional failure 1 is identified to be the failure mode 1. Furthermore, a functional failure corresponding to the failure effect 4 at the lowest priority is identified to be the functional failure 3 (FF3), and a failure mode corresponding to the functional failure 3 is identified to be the failure mode 2.

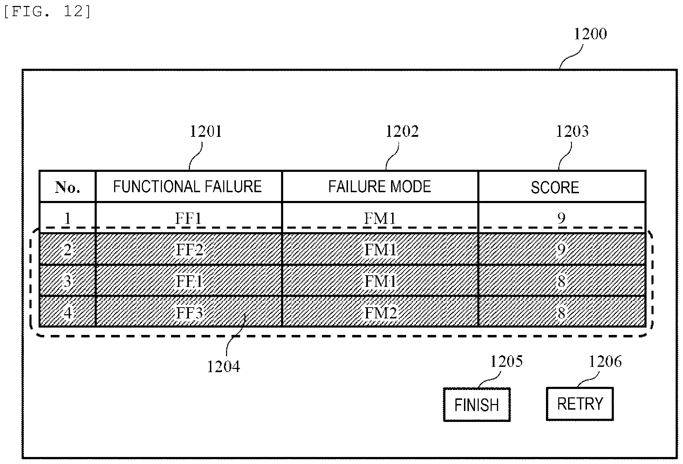

FIG. 12 is a diagram illustrating a failure mode estimation result (in priority order) display 1200 (one example). As illustrated in FIG. 12, the failure mode candidate display processing module 1012 outputs functional failures 1201 and failure modes 1202 to be listed in order from a higher score value 1203. When one functional failure includes a plurality of failure effects, the highest score is adopted. Note that the one in which the previous event does not match (for example, the functional failure 2 and the failure mode 1, the functional failure 1 and the failure mode 1, and the functional failure 3 and the failure mode 2 corresponding to the failure effect 3, the failure effect 1, and the failure effect 4) may be excluded from the list display. However, only the matching of the check items is still important information, and thus the one for which the previous event does not match (including the one without the previous event) may be presented with gray background without being excluded (a display 1204).

### (vii) Step 607

The failure mode candidate display processing module 1012 determines whether the user changes the check information and retries the failure mode estimation processing. For example, when the user sees the failure mode estimation result display 1200 illustrated in FIG. 12, the user determines whether to change the check information (see FIG. 9) and re-execute the failure mode estimation processing (the processing from Step 603 to Step 606) again. In a case of re-execution, the user presses a retry button 1206, and in a case in which the presented failure mode estimation result works, the user presses a finish button 1205. The failure mode candidate display processing module 1012 accepts the instruction from the user, and determines whether to repeat the processing from Step 603.

### (2) Second Embodiment

Although in the first embodiment the GUI is provided for the failure analysis, a second embodiment describes an example in which the failure mode estimation technique according to the first embodiment is embedded in an automatic analysis device. Moreover, in the second embodiment, inputting (input of the check information and the input of the failure effect) by a user is not required, and the failure mode is estimated through a batch processing.

### <Configuration Example of Automatic Analysis System Embedded with Failure Mode Estimation Processing>

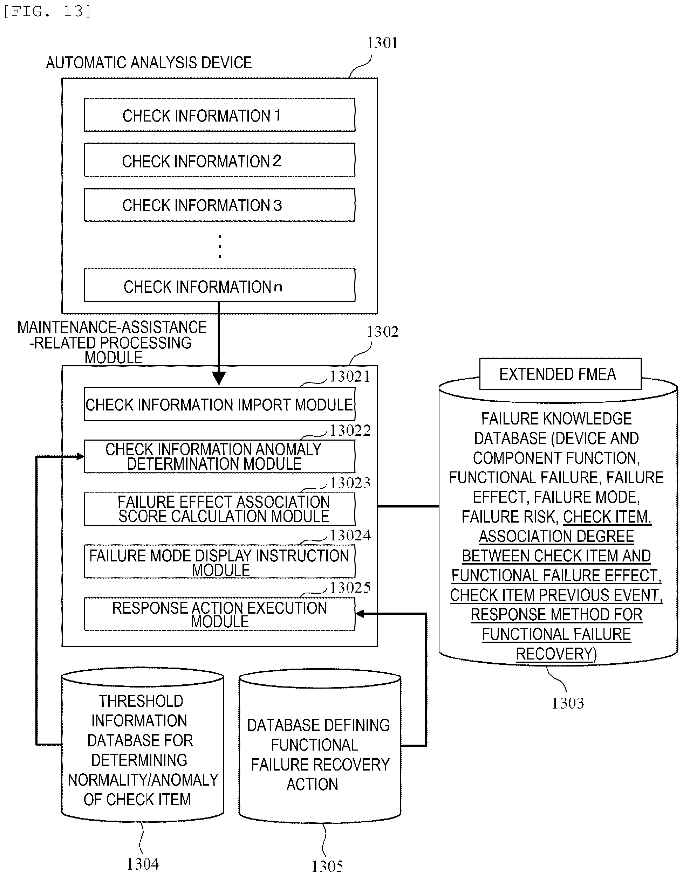

FIG. 13 is a diagram illustrating a schematic configuration example of an automatic analysis system 1300 in which a failure mode transition processing is embedded. The automatic analysis system 1300 includes an automatic analysis device 1301, a maintenance-assistance-related processing module (meaning not being configured to perform a processing to encourage a user to make input by displaying a GUI. This may be referred to as a batch processing module) 1302, an extended FMEA database 1303, a threshold information database 1304, and a recovery action definition database 1305. Note that FIG. 13 illustrates only components of the automatic analysis system 1300 which are necessary for batch processing of the failure mode estimation processing. Moreover, the maintenance-assistance-related processing module 1302 and the databases 1303 to 1305 may be embedded in the automatic analysis device 1301, or may be provided as a device (computer) separate from the automatic analysis device 1301.

The automatic analysis device 1301 outputs, to the batch processing module 1302, information on a check item (for example, included in an automatic analysis log) such as system alert information and sensor log data. The maintenance-assistance-related processing module (batch processing module) 1302 is a component which imports the check item of the automatic analysis device 1301 and automatically estimates the failure mode, and includes a check information import module 13021, a check information anomaly determination module 13022, a failure effect association score calculation module 13023, a failure mode display instruction module 13024, and a response action execution module 13025. The maintenance-assistance-related processing module 1302 can be built by a processor (not illustrated) reading a program for implementation of the maintenance-assistance-related processing module 1302 from a storage device such as a memory, and expanding the program in an internal memory of the processor. The extended FMEA database 1303 has a configuration in which information on a response method for recovery from a functional failure is added to the extended FMEA database 141 illustrated in FIG. 2.

In the maintenance-assistance-related processing module (batch processing module) 1302, the check information import module 13021 uses a communication means with the automatic analysis device 1301 to import a plurality of pieces of check information from the automatic analysis device 1301.

The check information anomaly determination module 13022 automatically determines whether anomaly is observed in the plurality of pieces of imported check information (including event data and sensor log data of the automatic analysis device). For example, a sensor threshold (normal value range) of the automatic analysis device 1301 may be defined on a per-operation event basis (defined in the threshold information database 1304), and the check information anomaly determination module 13022 may be configured so that it can determine normality/anomaly by synchronizing the event data of the automatic analysis device 1301 and the time-series sensor data. Alternatively, the check information anomaly determination module 13022 may be configured so that it can determine approach to an anormal value by performing data analysis on a time-series behavior (trend) of an analysis result of the automatic analysis device 1301, and estimating a degradation level of a reagent, for example.

The failure effect association score calculation module 13023 has the same function as the failure effect association score calculation module 1014 described in the first embodiment. The failure mode display instruction module 13024 instructs a display unit (not illustrated) of the automatic analysis device 1301 and/or a display unit (not illustrated) of a terminal etc., connected to the automatic analysis device 1301 to display the failure mode.

The automatic analysis system 1300 not only displays the estimated failure mode (displays in order of priority), but also controls the automatic analysis device 1301 for recovering from the functional failure (the response action execution module 13025). In detail, the response action execution module 13025 obtains, based on the failure mode estimation result, the information on the response method for recovering from the functional failure, the information being stored in the extended FMEA database 1303, and executes action for the failure recovery in accordance therewith. For example, assuming that the failure mode is "liquid feeding fault due to a clogged pipe", the response action execution module 13025 instructs "forced cleaning of the pipe" to the automatic analysis device 1301, and recovers from the functional failure.

### <Concrete Processing>

More concrete processing is described. Here, as one example, a liquid chromatograph device (LC device) which is a component of the automatic analysis device 1301 is described. As a plurality of operation events of the LC device, introducing a reagent, analyzing, and line cleaning are supposed.

The threshold information database 1304 for determining normality/anomaly of the check item stores, for example, normal ranges of a pressure sensor of a syringe during the events of the reagent introduction, analysis, and line cleaning to be xMpa or less, yMpa or less, and zMpa or less, respectively. The pressure sensor of the syringe outputs pressure data at a specific interval to a log file in time series. Moreover, also as for the operation events, the operation events are outputted as a log file in time series so that which operation event is performed during a certain time window can be determined.

The check information anomaly determination module 13022 of the maintenance-assistance-related processing module 1302 compares these two pieces of time-series data, and examines whether the pressure data of the syringe does not deviate from the normal range within a specific period from the current time. In a case of deviation from the normal range, the check information anomaly determination module 13022 deals the pressure sensor of the syringe as a "check item in which an event different from an ordinary time is observed", similarly to the check item in which anomaly is detected in the interactive processing described in the first embodiment. Next, the failure effect association score calculation module 13023 ranks and estimates the failure mode which may be occurring. Then, the failure mode display instruction module 13024 displays, on a console etc. of the automatic analysis device 1301, the component/part where a problem is assumed to be occurring. The recovery action definition database 1305 is a database which defines a recovery action from the functional failure, and stores a sequence definition for recovery from the functional failure on a per-functional failure basis. In a case in which an action to recover from the functional failure which is high possibly occurring is defined in the recovery action definition database 1305, the response action execution module 13025 automatically executes the recovery action.

### (3) Summary

(i) In the conventional technique, when a problem occurs in a system, a check item (for example, a content of a system alert, and log data of a sensor) is inspected to identify a content of failure. However, particularly in a case in which, for example, anomaly appears in a plurality of check items at the same time, identifying the failure may take time, and shortening of maintenance time is desired. Moreover, increase in a maintenance cycle by predicting in advance occurrence of a problem in a device which is subject to maintenance, and automatically performing recovery control is desired.

In order to deal with such an issue, the technique disclosed herein provides the extended FMEA database, and supports identification of the failure mode when the functional failure occurs. While focusing on the fact that, in the extended FMEA database, the check item valid for identifying the cause of the functional failure varies depending on a type of the functional failure, "the check item" and "the degree of association between the check item and the functional failure effect" are defined on a per-functional failure effect basis. The maintenance assistance device of the disclosure calculates a degree of matching between the change in the check item corresponding to the failure event recorded in the extended FMEA database and the actually observed check result, and narrows down the failure mode. Thereby, the maintenance assistance device makes diagnosing operation easier (makes inputting by a user intuitive and easier), and performs prioritization of the failure mode by the score calculation.

As described above, in the disclosure, not only the failure mode which matches the check item being simply presented, but the failure mode which is likely to cause anomaly to the check item is preferentially displayed in consideration of a chronological relationship (before-and-after) of the events which occur in the check items. Therefore, narrowing down of the failure mode can be performed rapidly. Moreover, this is also applicable to a predictive diagnosis before occurrence of fatal malfunction in a device subject to maintenance. Furthermore, by a means for determining presence or absence of anomaly in sensor information being provided to be linked with the sensor information and a system alert of a device body, the failure mode candidate can be outputted directly from the device body.

(ii) The function of the embodiments of the disclosure may be implemented by a program code of software. In this case, a storage medium recording the program code is provided to a system or a device, and a computer (or a CPU or an MPU) of the system or the device reads the program code stored in the storage medium. In this case, the program code itself read from the storage medium, implements the function of the embodiments, and the program code itself and the storage medium storing the program code constitute the disclosure. As the storage medium which supplies such a program code, for example, a flexible disk, a CD-ROM, a DVD-ROM, a hard disk drive, an optical disc, a magnetooptical disc, a CD-R, a magnetic tape, a nonvolatile memory card, a ROM, and the like may be used.

Moreover, an OS (operating system) which runs on a computer may execute a part of or the entire actual processing based on instruction of a program code, and the function of the embodiments may be implemented by the processing. Furthermore, after a program code read from a storage medium is written into a memory on a computer, a CPU of a computer and the like may execute a part of or the entire actual processing based on instruction of the program code, and the function of the embodiments may be implemented by the processing.

Furthermore, by a program code of software which implements the function of the embodiments being distributed via a network, the program code may be stored in a storage means such as a hard disk drive and a memory of a system or a device, or a storage medium such as a CD-RW and a CD-R, and a computer (or a CPU or an MPU) of the system or the device may read the program code stored in the storage means or the storage medium at a time of use to execute the program code.

Finally, it should be understood that the process and technique described herein are essentially not related to any specific device, and can be implemented by any suitable combination of components. Furthermore, various types of devices for a general purpose are usable in accordance with the teaching described herein. Building a dedicated device may be found beneficial to execute the steps in the method described herein. Moreover, various inventions may be formed by suitable combination of the plurality of components disclosed in the embodiments. For example, some of the components may be deleted from all the components provided in the embodiments. The components in the different embodiments may be combined suitably. Although the disclosure is described in relation to a specific example, this is not for the sake of limitation but for the sake of explanation in all perspectives. A person skilled in the art may understand existence of multiple combinations of hardware, software, and firmware which are suitable for practicing the disclosure. For example, the described software may be implemented by a wide range of programing or scripting languages such as an assembler, C/C++, Perl, Shell, PHP, and Java^{®}.

Furthermore, in the embodiments, the control line and the information line which are considered to be necessary for explanation are presented, and all of the control lines and information lines of the product are not necessarily presented. All the configurations may be connected to one another.

### Reference Signs List

10: maintenance assistance device
100: processor
110: communication device
120: input device
130: output device
140: storage device
141: extended FMEA database
101: maintenance-assistance-related processing module (GUI processing module)
102: input-and-output control module
103: communication control module
1011: functional failure effect input processing module
1012: failure mode candidate display processing module
1013: check information input processing module
1014: failure effect association score calculation module
1015: check item previous event evaluation module
1300: automatic analysis system
1301: automatic analysis device
1302: maintenance-assistance-related processing module (non-GUI processing module (batch processing module))
1303: extended FMEA database
1304: threshold information database
1305: recovery action definition database
13021: check information import module
13022: check information anomaly determination module
13023: failure effect association score calculation module
13024: failure mode display instruction module
13025: response action execution module

## Claims

1. An information processing device comprising:
an extended FMEA database including, on a per-failure effect basis:
information on a check item;
information on a degree of association between the check item and the failure effect; and
information on a previous event of the check item; and
a processor configured to obtain information on a check item confirmed as an event, and identify a failure mode corresponding to a failure effect on the basis of the obtained check item, wherein
the processor executes:
a first process for extracting information on the failure effect associated with the check item from the extended FMEA database;
a second process for calculating a score value for the failure effect extracted in the first process by referring to the information on the degree of association between the check item and the failure effect; and
a third process for presenting, on the basis of the score value, the failure mode corresponding to the failure effect extracted in the first process.

2. The information processing device according to Claim 1, wherein the processor executes the third process while giving higher priority to the failure mode corresponding to the failure effect of which the score value is high.

3. The information processing device according to Claim 2, wherein the processor further executes a process for extracting the previous event of the check item by referring to the extended FMEA database, and
when the failure effect extracted in the first process includes failure effects having the same score value, the processor executes the third process while giving higher priority to the failure effect including the previous event the same as a pervious event specified by a user.

4. The information processing device according to Claim 1, wherein the check item confirmed as the event is a check item selected by a user.

5. The information processing device according to Claim 1, wherein the check item confirmed as the event is a check item identified based on event data and sensor log data outputted from a device subject to maintenance assistance.

6. An automatic analysis system comprising:
an extended FMEA database including, on a per-failure effect basis of an automatic analysis device:
check information;
information on a degree of association between the check information and the failure effect; and
information on a previous event of the check information; and
a processor configured to obtain, from the automatic analysis device, event data and sensor log data as the check information, and identify a failure mode corresponding to a failure effect on the basis of the obtained check information, wherein
the processor executes:
a first process for determining whether the sensor log data includes anomaly;
a second process for extracting information on the failure effect associated with the anormal sensor log data determined to include anomaly, from the extended FMEA database;
a third process for calculating a score value for the failure effect extracted in the second process by referring to the information on the degree of association between the check information and the failure effect corresponding to the anormal sensor log data; and
a fourth process for estimating and presenting, on the basis of the score value, the failure mode corresponding to the failure effect extracted in the second process.

7. The automatic analysis system according to Claim 6, further comprising a threshold information database configured to hold information on a sensor threshold that defines a normal range of sensor data for each operation event of the automatic analysis device, wherein
in the first process, the processor obtains, from the threshold information database, a sensor threshold corresponding to a sensor that detects the obtained sensor log data, and compares the sensor log data and the sensor threshold to determine whether the sensor log data includes anomaly.

8. The automatic analysis system according to Claim 6, wherein the extended FMEA database further includes a response information for recovering from a functional failure corresponding to the failure effect, and
the processor obtains the response information corresponding to the estimated failure mode from the extended FMEA database, and causes the automatic analysis device to recover based on the response information.
